# EUROPEAN PATENT APPLICATION

(11) **EP 4 718 603 A1**
(43) Date of publication of application: **01.04.2026**
(21) Application number: 23210689.8
(22) Date of filing: 17.11.2023
(51) Int. Cl.: H01M 50/211, H01M 50/249

(54) **METHOD FOR PRODUCING A BATTERY DEVICE**

(71) Applicant: Lilium eAircraft GmbH, 82234 Wessling (DE)
(72) Inventor: WIEGAND, Daniel, 82234 Wessling (DE); REICHMANN, Benjamin, 82234 Wessling (DE)
(74) Representative: Ter Meer Steinmeister & Partner

(57) **Abstract**

The invention is related to a Method for producing a battery device (10), in particular for use in an electric aircraft, comprising the following steps:
- Providing a battery housing (20) with at least one cell compartment (30) having one receiving opening (32) and surrounding compartment walls (34) for holding a battery module (40) with multiple battery cells (42),
- Stacking multiple battery cells (42) on top of each other to create at least one battery module (40),
- Inserting the at least one battery module (40) into the at least one cell compartment (30) through the receiving opening (32),
- Closing the receiving opening (32) of the at least one cell compartment (30).

## Description

The present invention is related to a method for producing a battery device, in particular for use in an electric aircraft, as well as to a battery device, in particular for an electric aircraft.

It is common knowledge that concepts exist for electric aircrafts comprising battery devices for storing and providing electric energy for electric flight operation. Those battery devices usually are constructed by several battery modules comprising multiple battery cells. Those battery cells are usually stacked in compartments to ensure safe and secure storing during the flight operations of the electric aircraft. It is also known that battery cells usually need to be compressed by a defined compression force for the full functionality.

One disadvantage of the present solutions is the fact that the compression of the battery cells during the mounting procedure is quite difficult and complex. In particular based on the present solutions and concepts battery cells are stacked to battery modules and in a next step those battery modules with the stacked battery cells are surrounded by the respective compartment walls. Then the compartment walls are used to provide the compression force to the battery cells. In that compressed state for the completion of the compartments for example the compartment walls are fixed to each other by mounting steps and/or welding procedures. In particular it is a problem to hold the compression force on the battery cells and the battery modules while completing the compartment walls around those compressed battery cells.

It is an object of the present invention to solve at least partly aforesaid problems. In particular it is an object of the present invention to provide a cost efficient and easy production method for mounting battery cells to form a battery device in particular for an electric aircraft.

According to the present invention a method for producing a battery device, in particular for use in an electric aircraft, is provided, comprising the following steps:
- Providing a battery housing with at least one cell compartment having one receiving opening and surrounding compartment walls for holding a battery module with multiple battery cells,
- Stacking multiple battery cells on top of each other to create at least one battery module,
- Inserting the at least one battery module into the at least one cell compartment through the receiving opening,
- Closing the receiving opening of the at least one cell compartment.

One general difference of the present invention in relation to the known concepts is the fact that the battery cells are stacked and mounted separately from the battery housing. The battery housing is also constructed separately from the battery cell and is providing several cell compartments with receiving openings defined by surrounding compartment walls. In other words, the battery housing is provided excluding the battery cells but including several compartments for the insertion of the battery modules in an additional step. This leads to the advantage that the battery housing can be manufactured completely separately and in particular without the need to secure any battery cells or to compress the battery cells while mounting the battery housing. Furthermore, battery cells can be stacked onto each other to create a battery module also independently from the mounting procedure of the battery housing. In other words, those two mounting steps can be conducted completely separate while in terms of a marriage procedure the stacked battery cells in form of the battery module are then inserted in the finalised battery housing through the receiving opening. In a final step according to the present invention, once the battery module has been inserted into the at least one cell compartment through the receiving opening the receiving opening is closed in thereby the battery housing is closed and finalised.

It has to be noted that according to the present invention a compression step of the battery cells can take place before and/or after the inserting step of the battery module. The general idea of the present invention is independent from the procedural step of the compression. In particular the main advantage lies in the separation of the mounting step for the battery cells and the mounting step for the battery housing. By the separation of those two mounting steps several advantages can be achieved. In particular the battery housing can be constructed without the need to take care of any electric security issues. On the other hand, the battery cells can be stacked on to each other without the limitation of any surrounding walls like compartment walls or other battery housing walls. Furthermore, based on those separate method steps the compression step is independent from the mounting and can be conducted either separately from the battery housing and/or once the insertion of the battery module has taken place already. It is further to be noted that by stacking the multiple battery cells separately from the housing the connectivity can be provided between the battery cells also before they are inserted as a battery module into the cell compartment. This leads to further security increase for the mounting procedure of the battery housing since no electric activity needs to be taken care of during that step.

It is further an advantage if according to the present invention the method is characterised in that after stacking the battery cells, the at least one battery module is compressed, wherein the at least one compressed battery module is inserted into the at least one cell compartment in its compressed state. In other words, a compression can take place outside of the battery housing and no circumstances or added complexities need to be taken care of. Different compression tools, as described later on in more detail, can be used outside and/or inside of the battery housing to provide that compression step. Based on the external compression also smaller compartment dimensions are possible due to the insertion with the compressed dimension. A compression in terms of the present invention is in particular the application of a compression force perpendicular to a flat extension of the battery cells. This is in particular true in the case the battery cells are provided as pouch cells and thereby have a flat or in general flat extension.

It is further an advantage if according to the present invention the method is characterised in that the battery cells for at least one battery module are stacked inside of a vacuum bag. The vacuum bag is evacuated after the battery cells have been stacked to compress the battery module and further the vacuum bag is opened for pressure compensation after it has been inserted into the at least one cell compartment. Such a vacuum bag can be considered to be a compression tool as discussed in the paragraph above. Due to the insertion of the battery cells into the vacuum bag and the sealing of the vacuum bag the evacuation of the vacuum bag leads to the application of the necessary compression force. In other words, by sucking the air out of the vacuum bag the battery cells are compressed automatically by the reduction of inner pressure in the vacuum bag in comparison to the remaining ambient pressure. As a long as the vacuum is kept in the vacuum bag the battery cells remain in this compressed state. This compressed state is in particular of advantage since the vacuum bag does not need to incorporate any further external tool sets. Once the evacuation is finalized and the sealing of the evacuated vacuum bag is completed the vacuum is kept steady by the vacuum bag itself and the compression is kept steady thereby. After insertion in this compressed state the compression can be kept by the compartment walls and thereby the vacuum bag can be opened for example by piercing to reventilate the vacuum bag. By the exchange of pressure with the ambient pressure this leads to a situation where the vacuum bag is kept inside of the compartments but the compression force is no longer kept by the vacuum bag but by the compartment walls surrounding the vacuum bag and the battery cells. In other words, the vacuum bag is only used to be a compression tool in the meaning of the present invention to keep the compression state for the step of inserting the compressed battery module through the receiving opening into the at least one cell compartment. In particular this can for example be done by an automatic piercing of the vacuum bag while providing a piercing element inside of the compartment. By moving the vacuum bag into the compartment thereby an automatic piercing and thereby an automatic pressure compensation takes place. Additional steps for piercing and pressure compensation are thereby obsolete. In particular for several battery modules in several compartments the identical method steps are used.

It is further an advantage if according to the present invention the method is characterised in that the stacked battery cells of at least one battery module are compressed by a compression plier comprising two plier faces each applying a compression force to opposing sides of the battery module. The compressed module is inserted into the cell compartment when further the compression plier releases the compression force after insertion and is moved outside the cell compartment. Again, that compression plier can be considered to be a compression tool as discussed in the paragraphs above. By having two plier faces those plier faces can be placed opposing sides of the battery module and moved towards each other. Thereby the necessary compression force is applied to the side faces of the stack of battery cells of the battery module and the necessary compression force is applied to that stack. Due to the compression force and the application by the plier faces the dimension in that direction is reduced and the whole compressed battery module can be moved through the receiving opening into the at least one cell compartment together with the plier faces. After the insertion step has been completed the plier faces can move a little outward and thereby the compression forces are reduced but no fully released. In that position the plier faces can be moved outside in particular by using a holding tool or pushing stamp to keep the battery cells in their position inside of the cell compartment during the movement.

It is further an advantage if according to the present invention the method is characterised in that after inserting the battery module into the cell compartment, spaces between battery cells are filled with compression material, in particular a compression foam. Since a compression might be of advantage for the battery cells that compression can also be created after the inserting of the battery module into the at least one cell compartment. This can for example be done by applying a compression material which holds or provides and creates the compression force on the battery cells after they have been positioned inside of the cell compartment. Once in that embodiment of the inventive method the battery module is inserted in a non-compressed state into the at least one cell compartment the compression material in particular by extension of the material itself can apply that compression force. For example, the battery module is inserted in a non-compressed state into at least one cell compartment and afterwards the compression material is filled into the spaces in between the battery cells. By an extension for example a foaming step of the compression material the volume of the compression material is increased and thereby the necessary compression force is applied on the battery cells of the battery module. This can of course be combined by an at least partly external compression as discussed in the paragraphs above.

It is further an advantage if according to the present invention the method is characterised in that the battery module is inserted into the cell compartment with an insertion fork, wherein the insertion fork is extracted from the cell compartment after the insertion is completed. That insertion fork can be part of the compression plier as discussed further above. An insertion fork in particular provides two separate fork elements which can be slid into respective openings being part of the battery module itself. This allows a fork movement together with the battery module for the easy and safe insertion of the battery module into the at least one cell compartment. The compression can be done inside or outside of the battery house by the help of the insertion fork or with the help of additional compression tools. This can also be described as a sliding method or a sliding movement for inserting the at least one battery module into the at least one cell compartment.

A further advantage is achieved if according to the present invention the method is characterised in that after inserting the at least one battery module in a compressed state, a pushing stamp is used to apply a holding force against the battery module to extract any insertion tool while keeping the compressed at least one battery module in the compartment. In other words, a compression can be provided outside of the battery housing and after the movement in the compressed state the pushing stamp which in particular has a stamp direction and a securing direction perpendicular to the compression force, keeps the battery module inside of the compartment while retracting the inserting tool for example a compression plier and/or a fork as discussed further above.

A further advantage can be achieved if according to the present invention the method is characterised in that all cell compartments are closed with a single housing wall of the battery housing. In particular if more than one cell compartment is provided by the battery housing a single closing step can be obtained by having a single housing wall. The single housing wall thereby closes several receiving openings of several cell compartments at once thereby reducing the effort and the complexity of that final method step.

It is further an advantage if according to the present invention the method is characterised in that before inserting the at least one battery module, the battery cells are electrically connected with each other. This in particular true for battery cells of one battery module to be placed in one single cell compartment. Of course, if several cell compartments are provided by a battery housing several battery modules are inserted separately into those cell compartments. Since the battery cells of one battery module can be electrically connected outside of the battery housing the connection between the battery modules over the compartment walls themselves is completed after the insertion has been finalized. The battery cells itself are connected outside and thereby an easy connectivity creation is possible. Furthermore, the battery advantageously has a low voltage for a secure handling of the packs even after they have been electrically connected to each other.

A further advantage can be achieved if according to the present invention the method is characterised in that the battery housing comprises at least two cell compartments, wherein the battery modules are inserted one after another. This can be understood as a serial insertion of only one battery module at a time. Beside the fact that this might take more time only one inserting tool and/or only one compression tool for external compression is necessary and thereby the complexity of a production assembly line is significantly reduced. Of course, in general it is also possible to have multiple battery modules inserted in parallel in particular via several tools and/or by one single tool which can also be considered to be a multitool.

It is further an advantage if according to the present invention the method is characterised in that multiple battery modules are connected electrically after insertion into the cell compartments. As discussed further above the separate battery cells can be connected outside while the several battery modules can be connected after the insertion has been finalised. In particular these battery modules can provide plugs which are just plugged in to the respective counter plugs at their adjacent battery modules in the adjacent compartment. This allows a very easy simple combination and electrical connection to provide a high voltage battery device after the connectivity has been generated.

It is a further aspect of the present invention to provide a battery device, in particular for the electric aircraft. Such a battery device is produced by an inventive method and characterised in that the battery housing comprises at least one cell compartment wherein the at least one cell compartment holds at least one battery module. Thereby the inventive battery device comes along with the same advantages as discussed in detail with respect to the inventive method.

Further advantages and examples are discussed with respect to the accompanying drawings. Those shows in a schematic way:
- Figure 1: one embodiment of an inventive battery device,
- Figure 2: different mounting steps for an inventive method,
- Figure 3: one embodiment of an inventive method,
- Figure 4: a further embodiment of an inventive method,
- Figure 5: a further embodiment of an inventive method,
- Figure 6: a further embodiment of an inventive method,
- Figure 7: a further embodiment of an inventive method and
- Figure 8: a further embodiment of an inventive method step.

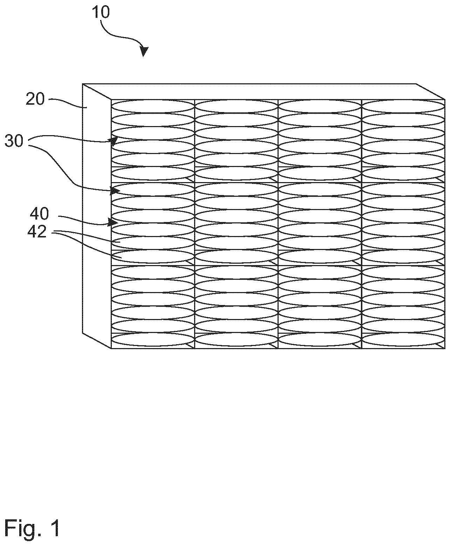

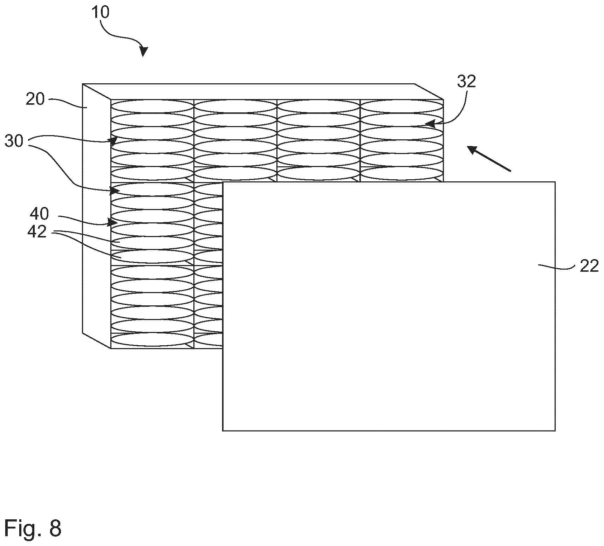

Figure 1 shows in a schematic way a battery device 10 comprising several battery cell compartments 30. Those are aligned in three rows and four columns. The battery housing 20 provides those cell compartments 30 and each of the cell compartments 30 already hold battery modules 40 each with several battery cells 42. That battery device can be closed in a final step, as depicted in figure 8, by one single housing wall 22.

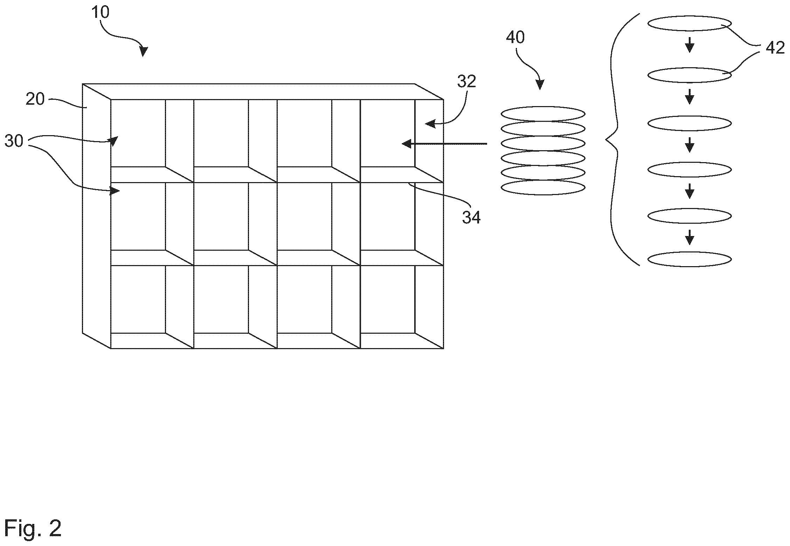

In figure 2 in general the inventive method can be described. Several battery cells 42, in this example six battery cells 42 are stacked on top of each other. Each of those battery cells 42 are embodied in form of a pouch cell in this specific embodiment. After stacking those battery cells 42 together they can be considered to be one single battery module 40. At this stage an electric connection can be provided between the battery cells 42 such that the battery module 40 can be considered as a fully connected battery module 40. In a next step that battery module 40 is inserted through a receiving opening 32 inside of one single cell compartment 30. Compartment walls 34 surround the inserted battery module 40. In the following paragraphs different ways of compressions and insertions are described in more detail.

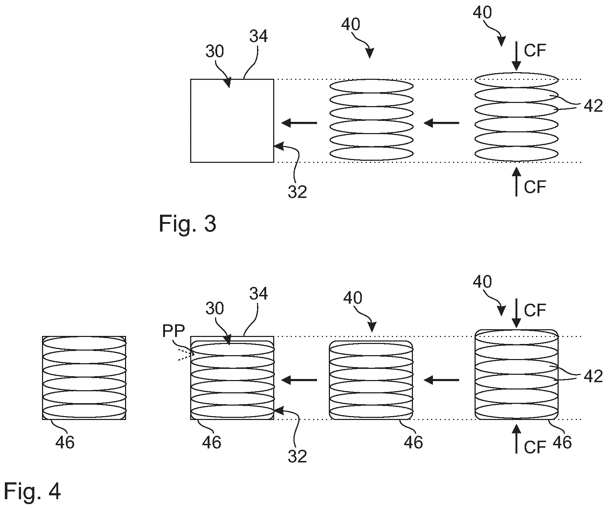

Figure 3 shows a very easy solution by applying a compression force CF on the opposing sides of the battery module 40 namely on the outer battery cells 42. By applying the compression force CF the dimension in the direction of the compression force CF of the battery module 40 is reduced and in such compressed state the compressed battery module 40 is then moved to the left through the receiving opening 32 into the cell compartment 30.

Figure 4 shows one possibility to apply that compression force CF with a specific compression tool. In this case the compression tool is comprising a vacuum bag 46 and/or the battery cells 42 have been placed in that vacuum bag 46. From the right to the left the vacuum bag 46 is now evacuated and by sucking out the air and reducing the inner pressure of the vacuum bags 46 compression forces CF apply and thereby the dimension of the battery module 40 is reduced. As it can be seen in figure 4 that compression forces CF are reducing the extension of the vacuum bag 46 in a way that it is smaller than the receiving opening 32. In this case a very easy sliding movement can insert the vacuum bag 46 and thereby the battery module 40 into the cell compartment 30. In the next step with a piercing tool a piercing point PP can pierce the vacuum bag 46 and thereby a pressure compensation can take place. That results in a release of the compression forces CF resulting from the evacuated vacuum bag 46 and a minor extension of the battery module 40. On the left side in figure 4 the final step can be seen where the vacuum bag 46 still remains in a pressure compensated situation. Now the cell compartment walls 34 apply the compression forces CF to keep the compression stable on the battery module 40.

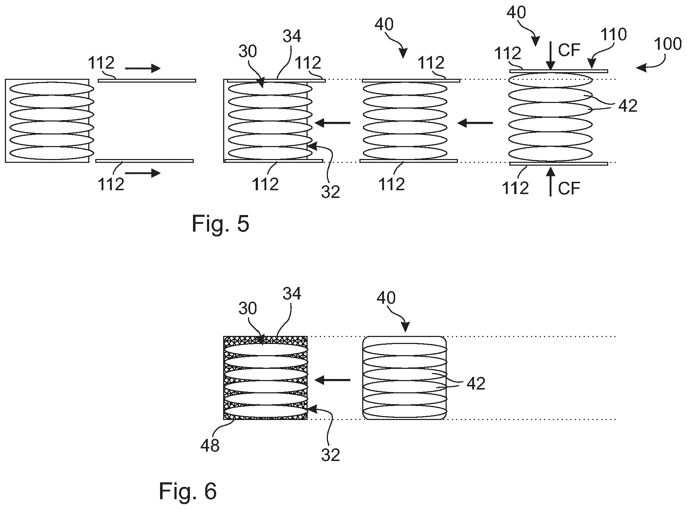

Figure 5 shows a different type of compression tool. Again starting from the right the compression forces CF are here applied by a compression plier 110. By moving at least one of those compression pliers 110 with a plier face 112 together the compression force CF leads to the necessary reaction of the dimension of the battery module 40. Similar to the description above now the battery module 40 is moved to the left into the cell compartment 30 through the receiving opening 32 in this case together with the plier faces 112. To retract the plier faces 112 a further stamp element, not shown in figure 5, can be used to keep the inserted battery module 40 in the place as depicted in figure 5 on the further left while still retracting now the plier faces 112.

In figure 6 a further embodiment for applying the compression forces is depicted. In this case the battery module 40 is inserted in a non-compressed state into the cell compartment 30. To apply the compression forces now after the insertion a compression material 48 is inserted in the spaces in between the battery cells 42. For example, the compression material 48 can be extending foam so now the compression forces CF are applied to the battery cells 42 by the foaming process of the compression material 48.

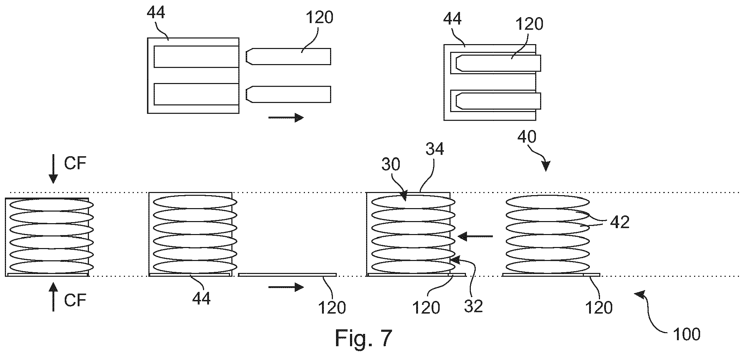

Figure 7 shows a further type of a handling tool 100. In this case an insertion fork 120 is used to be moved together with a module holder 44 inside of the cell compartment 30. In this case after the insertion the cell compartment 30 itself can be used to apply the compression forces CF in the inventive manner.

In figure 8, as already shortly discussed, the final step is depicted by closing all of the receiving openings 32 in one single step. One single housing wall 22 provides that solution and is closing all twelve cell compartments 30 in this embodiment.

The aforesaid discussed embodiments describe the present invention only by the way of example.

### Reference signs

- 10: battery device
- 20: battery housing
- 22: housing wall
- 30: cell compartment
- 32: receiving opening
- 34: compartment wall
- 40: battery module
- 42: battery cell
- 44: module holder
- 46: vacuum bag
- 48: compression material

- 100: handling tool
- 110: compression plier
- 112: plier face
- 120: insertion fork

- CF: compression force
- RD: reduction direction
- PP: piercing point

## Claims

1. Method for producing a battery device (10), in particular for use in an electric aircraft, comprising the following steps:
- Providing a battery housing (20) with at least one cell compartment (30) having one receiving opening (32) and surrounding compartment walls (34) for holding a battery module (40) with multiple battery cells (42),
- Stacking multiple battery cells (42) on top of each other to create at least one battery module (40),
- Inserting the at least one battery module (40) into the at least one cell compartment (30) through the receiving opening (32),
- Closing the receiving opening (32) of the at least one cell compartment (30).

2. Method according to claim 1, **characterised in that** after stacking the battery cells (42), the at least one battery module (40) is compressed, wherein the at least one compressed battery module (40) is inserted into the at least one cell compartment (30) in its compressed state.

3. Method according to claim 2, **characterised in that** the battery cells (42) for at least one battery module (40) are stacked inside of a vacuum bag (46), wherein the vacuum bag (46) is evacuated after the battery cells (42) have been stacked to compress the battery module (40), wherein further the vacuum bag (46) is opened for pressure compensation after it has been inserted into the at least one cell compartment (30).

4. Method according to any of claims 2 or 3, **characterised in that** the stacked battery cells (42) of at least one battery module (40) are compressed by a compression plier (110) comprising two plier faces (112) each applying a compression force (CF) to opposing sides of the battery module (40), wherein the compressed battery module (40) is inserted into the cell compartment (30), wherein further the compression plier (110) releases the compression force (CF) after insertion and is moved out of the cell compartment (30).

5. Method according to any of the preceding claims, **characterised in that** after inserting the battery module (40) into the cell compartment (30), spaces between the battery cells (42) are filled with compression material (48), in particular a compression foam.

6. Method according to any of the preceding claims, **characterised in that** the battery module (40) is inserted into the cell compartment (30) with an insertion fork (120), wherein the insertion fork (120) is extracted from the cell compartment (30) after the insertion is completed.

7. Method according to any of the preceding claims, **characterised in that** after inserting the at least one battery module (40) in a compressed state, a pushing stamp is used to apply a holding force against the battery module (40) to extract any insertion tool while keeping the compressed at least one battery module (40) in the compartment (30).

8. Method according to any of the preceding claims, **characterised in that** all cell compartments (30) are closed with a single housing wall (22) of the battery housing (20).

9. Method according to any of the preceding claims, **characterised in that** before inserting the at least one battery module (40), the battery cells (42) are electrically connected with each other.

10. Method according to any preceding claims, **characterised in that** the battery housing (20) comprises at least two cell compartments (30), wherein the battery modules (40) are inserted one after another.

11. Method according any of the preceding claims, **characterised in that** multiple battery modules (40) are connected electrically after insertion into the cell compartments (30).

12. Battery device (10), in particular for an electric aircraft, being produced by a method according to claims 1 to 10, **characterised in that** a battery housing (20) comprises at least one cell compartment (30), the at least one cell compartment (30) holding at least one battery module (40).
